# EUROPÄISCHE PATENTSCHRIFT

(11) **EP 1 608 696 B1**
(45) Veröffentlichungstag und Bekanntmachung des Hinweises auf die Patenterteilung: **21.06.2006**
(21) Anmeldenummer: 04762623.9
(22) Anmeldetag: 07.08.2004
(51) Int. Cl.: C08J 3/12, C08G 63/88, B29B 9/06

(54) **VERFAHREN ZUR THERMISCHEN BEHANDLUNG VON POLYESTERPELLETS**
METHOD FOR THE THERMAL TREATMENT OF POLYESTER PELLETS
PROCEDE DE TRAITEMENT THERMIQUE DE GRANULES DE POLYESTER

(30) Priorität: 17.10.2003 DE 10349016; 03.05.2004 DE 102004021595
(43) Veröffentlichungstag der Anmeldung: 28.12.2005
(73) Patentinhaber: BKG Bruckmann & Kreyenborg Granuliertechnik GmbH, 48157 Münster (DE)
(72) Erfinder: BRUCKMANN, Theodor, 46509 Xanten (DE)
(74) Vertreter: Habbel, Hans-Georg
(86) Internationale Anmeldenummer: PCT/DE2004/001778
(87) Internationale Veröffentlichungsnummer: WO 2005/044901

(56) Entgegenhaltungen:
- DE-A- 10 151 434
- GB-A- 1 250 690
- US-A- 5 532 335

## Beschreibung

Die Erfindung bezieht sich auf ein Verfahren zur thermischen Behandlung von Polyesterpellets, um eine Kristallisation zu erreichen.

Polyethylenterephthalat, im nachfolgenden PET abgekürzt, ist ein Polyester mit sich wiederholenden Estergruppen.

PET kann in verschiedenen Strukturen vorliegen, nämlich in amorpher oder in kristalliner bzw. teilkristalliner Form. Dabei ist amorphes PET meistens durchsichtig, kristallines PET opaque oder weiß. Wie bei allen Thermoplasten die in amorpher oder kristalliner Form vorkommen können, ist auch bei PET ein Kristallisationsgrad von 100 % nicht möglich. Lediglich ein Teil der Struktur des PET ist in der Lage, sich zu orientieren, also zu kristallisieren. Kristalline und amorphe Bereiche wechseln sich ab. Daher ist immer von einer Teilkristallinität zu sprechen.

Bei PET kann ein Kristallisationsgrad von ca. 50 % erreicht werden, um zu verhindern, daß die Pellets oder Granulate miteinander verkleben. Das bedeutet, daß sich in diesem Zustand die Hälfte der Molekülketten zueinander orientiert haben, sich also parallel nebeneinander gelegt oder kreisförig aufgewickelt haben. Zwangsläufig werden also in den teilkristallinen Gebieten die Wechselwirkungen (van-der-Waals Kräfte) zwischen den Molekülketten größer. Die Ketten ziehen sich also gegenseitig an, und damit werden die Zwischenräume zwischen den Molekülen kleiner.

Als thermoplastischer Kunststoff ist PET bei Temperaturen von 250° C formbar. Die Molekülketten werden dann so beweglich, daß der Kunststoff schmilzt und eine zähflüssige Masse entsteht, die in nahezu jede beliebige Form gebracht werden kann. Beim Erkalten frieren die Molekülketten wieder ein und der Kunststoff erstarrt in der gewünschten Form - ein einfaches und mehrfach wiederholbares Prinzip. Dieses Verfahren wird beispielsweise auch bei der Herstellung von PET-Flaschen angewandt. In einem ersten Schritt werden sogenannte Preforms hergestellt. Als Vorläufer der PET-Flaschen verfügen diese Preforms bereits über fertige Schraubgewinde. Damit man richtige Flaschen erhält, werden sie bei 100° C nochmals erweicht, mit Druckluft gestreckt und zu einer Flasche geblasen (Streckblasprozess).

Die Herstellung kristallisierter PET in Granulatform umfaßte bisher umfangreiche und komplizierte Wirbelschicht- oder Fließbettverfahren, die große Investitionen und hohe Kosten der Betriebsführung erforderten (DE 198 48 245 A).

Ein PET-Granulat muß bei einer Temperatur unterhalb derjenigen, bei der das Material klebrig wird, kristallisiert werden, um ein Zusammenfließen des Granulats zu einer festen und kaum noch verarbeitbaren Masse zu verhindern. Die Schmelztemperatur des kristallisierten Polyesters liegt zwar erst bei 240 bis 250° C, er kann jedoch bereits vor der Kristallisation bei Temperaturen über etwa 70° C, klebrig werden.

Soweit kontinuierliche Verfahren zur Herstellung von trockenem PET-Granulat bekannt geworden sind, benötigen sie im allgemeinen sehr große Anlagen, denn es sind lange Kristallisationszeiten erforderlich.

So wird beispielsweise in der US 5 532 335 A ein Verfahren zur thermischen Behandlung von Polyesterpellets vorgeschlagen, bei welchem die Pellets in ein Behandlungsgefäß eingeführt werden und ein flüssiges Medium ebenfalls in dieses Behandlungsgefäß geführt wird, wobei die Pellets und das flüssige Medium miteinander vermischt werden. Hierbei wird unter Druck stehendes oder sogenanntes überhitztes Wasser als flüssiges Medium in dem vorgeschlagenen Prozeß benutzt. Die Kochtemperatur kann leicht durch Änderung des Druckes in dem Reaktorgefäß kontrolliert werden. Bei einem Ausführungsbeispiel werden Polyesterpellets bei 120° - 182° C behandelt. Das Wasser wird bei 160° C eingeführt, im flüssigen Zustand gehalten und den Pellets zugemischt solange der Druck in der Reaktoreinheit bei 7 kg/cm² oder höher gehalten wird. Es ist offensichtlich, daß ein solches Verfahren außerordentlich kostenaufwendig und daher wirtschaftlich kaum durchzuführen ist.

Auch bekannte Verfahren, die mit einer aerodynamischen Behandlung arbeiten, haben den schwerwiegenden Nachteil, daß sie eine große Menge inerter Gase benutzten. Auch hier liegen die Energie- und Verfahrenskosten für eine praktische große Anwendung zu hoch.
PCT/DE 20041001778
BKG Bruckmann & Kreyenborg ...

In der GB 1 250 690 A wird ein Verfahren zur Herstellung von nach thermischer Behandlung in fester Phase für den Spritzguß geeigneten Polyäthylenterephtalat-Granulaten vorgeschlagen. Hierzu wird das Ausgangsmaterial als in üblicher Schmelzkondensation hergestellte, etwa 280° heiße Polyesterschmelze einem Unterwassergranulator zugeführt, wobei der aus der Düse gedrückte heiße Kunststoffstrang von einem aus einer Ringdüse kommenden Wasserstrahl erfaßt und abgekühlt wird. Weiterhin wird dieser Strang dann durch eine Unterwasserkühlstrecke einer Schneidvorrichtung zugeführt. Im Anschluß an die Schneidvorrichtung läuft das Granulat über ein Sieb, welches den Festkörper vom Wasser trennt, wobei das Wasser über einen Kühler im Kreislauf geführt wird. Das nasse Granulat kann nach seiner Trocknung zur thermischen Nachkondensation eingesetzt werden. Dieses Granulat ist insbesondere, wenn es in einer thermischen Nachkondensation bei über 200° C behandelt wird, in festem Zustand für den Spritzguß geeignet.

Wesentlich bei diesem Prozeß ist, daß das im Stranggranulationsverfahren (Unterwasser-Kaltabschlag-Granuliersystem) hergestellte und daher weitgehend abgekühlte Produkt für irgendeine weitere thermische Behandlung von Neuem aufgeheizt werden muß, also einen erheblichen Aufinrand an Energie erfordert, die bei dem vorauf gehenden Kühlverfahren verlorengegangen ist.

Um im Stand der Technik das Material ausreichend zu kristallisieren, war es also immer notwendig, dem Kristallisationsprozeß ausreichend externe Energie bzw. Wärme zuzuführen. Diese genannten Probleme erschwerten bisher das PET-Recycling.

Der Erfindung liegt die Aufgabe zugrunde, ein Verfahren zur Kristallisation von PET-Granulaten vorzuschlagen, das ohne die Zuführung von externer Energie bzw. Wärme auskommt und keine langen Verweilzeiten notwendig macht.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß das PET-Ausgangsmaterial in einem Extruder bei geeigneter Temperatur extrudiert wird. Anschließend werden Verunreinigungen mittels z. B. Siebwechslertechnik herausgefiltert. Die Polymerschmelze wird einem "Unterwasser-Heißabschlag-Granuliersystem", nachfolgend "Unterwassergranulierung" genannt, zugeführt und zu Granulaten verarbeitet, die aufgrund der Unterwassergranulation Kugelform oder Linsenform aufweisen und eine hohe Kerntemperatur aufweisen.

Diese PET-Granulate werden über eine Förderleitung mit hoher Geschwindigkeit zu einer Wasser-Feststofftrennvorrichtung gefördert, wobei als Fördermedium heißes Wasser, vorzugsweise bis zu 98° C eingesetzt wird. Ein wichtiger Aspekt für die Wirksamkeit des erfindungsgemäßen Verfahrens sind relativ kurze Förderwege zwischen der Granulierkammer und der Wasser-Feststofftrennvorrichtung.

Die PET-Granulate verlassen die Wasser-Feststofftrennvorrichtung mit einer Kerntemperatur von 130 -180° C, da dafür Sorge getragen ist, daß die Extrusionstemperatur des PET möglichst lange aufrechterhalten bleibt.

Die diese Temperatur aufweisenden Granulate werden dann einer Bewegung unterworfen wobei die Kristallisation beginnt. Diese Kristallisation gemäß dem erfindungsgemäßen Verfahren wird durch die Eigenwärme bedingt und hiermit wird erreicht, daß das Produkt, d. h. die Granulate nicht mehr verklumpen und nicht mehr aneinander kleben. Dieser Effekt wird dadurch auch erhöht, daß das zu kristallisierende Produkt Kugel- oder Linsenform aufweist, also mit möglichst geringen Berührungsflächen aneinander auskommt.

Die Verweilzeit der kugelförmigen Granulate in der Bewegungsphase beträgt beispielsweise 3 bis 8 Minuten und nach Durchlaufen dieser Phase sind die PET-Granulate zu 40 % und mehr kristallisiert und besitzen eine Temperatur von größer als 100° C. Der Transport der heißen PET-Granulate in einen Vorratssilo oder in eine Nachbehandlungsstation ist möglich, da die Granulate nicht mehr verkleben.

Der Erfindung liegt weiterhin die Aufgabe zugrunde, eine Vorrichtung vorzuschlagen, mit der die Bewegung der Granulate in wirkungsvoller Weise ermöglicht ist.

Als Bewegungsvorrichtung für die Granulate ist vorzugsweise eine sogenannte Kristallisationsrinne vorgesehen. Diese Kristallisationsrinne ist ähnlich aufgebaut wie eine Granulatförderrinne, aber in Förderrichtung gesehen in aufeinanderfolgende Kammern unterteilt, die durch Wehre voneinander getrennt sind. Die Kristallisationsrinne besitzt Vibrationsmotore, damit die sich darin befindenden Granulate permanent bewegt werden und so ihre Eigenenergie an andere Granulate abgeben können. In den einzelnen Kammern findet eine Umwälzung der PET-Granulate statt und ein Verkleben der Granulate ist nicht mehr möglich.

Mit dem erfindungsgemäßen Verfahren und der erfindungsgemäßen Vorrichtung wird eine schonende, wirtschaftlliche und schnelle Kristallisation von PET-Granulaten erreicht.

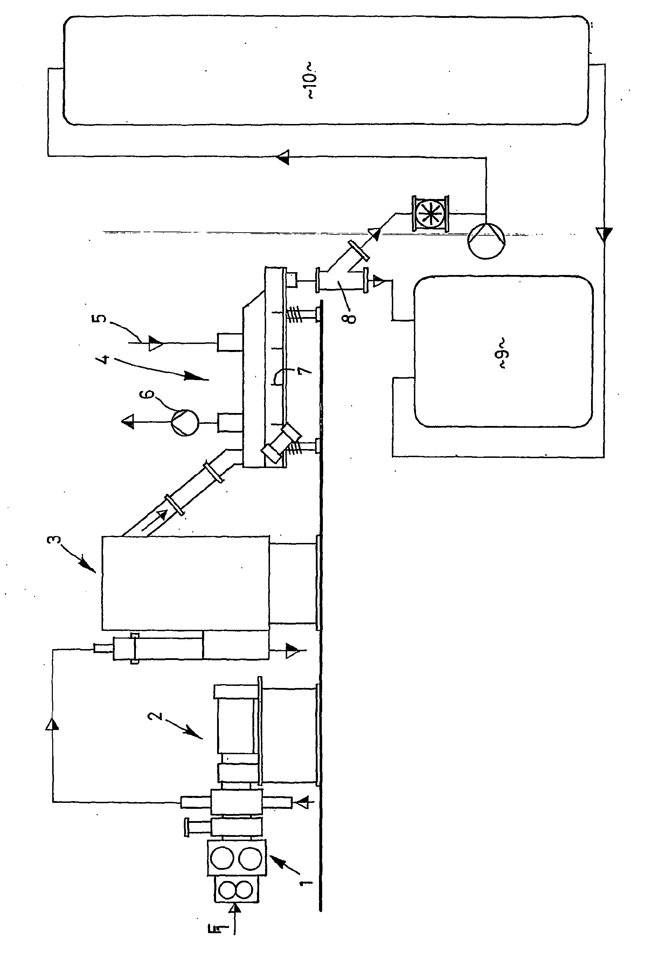

Ein Ausführungsbeispiel der Erfindung wird nachfolgend anhand der Zeichnung erläutert.

In der Zeichnung ist mit 1 eine Schmelzepumpe und ein Siebwechsler bezeichnet, dem entsprechend dem Pfeil F₁ ein Polyester zugeführt wird. Am Ausgang des Siebwechslers ist ein Unterwassergranulator 2 vorgesehen, durch den kugel- oder linsenförmige Granulate hergestellt werden. Diese Granulate werden durch eine Fördereinrichtung zu einer Wasser-Feststofftrennvorrichtung 3, z. B. einer Zentrifuge geführt, wobei die Förderung durch Prozeßwasser erfolgt, das vorzugsweise eine Temperatur von über 80° aufweist. Die Granulate verlassen die Wasser-Feststofftrennvorrichtung 3 mit einer Temperatur von über 110° und werden einer Förderrinne 4 zugeführt, der bei 5 Zuluft zugeführt werden kann, die die Fördereinrichtung 4 bei 6 verläßt und für eine Abführung der Feuchtigkeit sorgt. Die Fördereinrichtung 4 ist als Förderrinne ausgebildet mit gegenüber der Förderrichtung quer ausgerichteten Wehren 7, und die Granulate verlassen die Fördereinrichtung 4 mit einer Granulattemperatur von über 100° und können über eine sogenannte Granulatweiche 8 einer Nachbehandlungseinrichtung 9 oder einem Silo 10 zugeführt werden.

Diese Granulate sind zu 40 % und mehr kristallisiert und handhabungsfähig.

## Patentansprüche

1. Verfahren zur thermischen Behandlung von Polyesterpellets, um eine Teilkristallisation zu erreichen, **dadurch gekennzeichnet,**
• **daß** die Polyesterschmelze einem Unterwasser-Heißabschlag-Granuliersystem zugeführt und granuliert wird,
• **daß** die erzielten Granulate auf kurzem Förderweg von dem Unterwasser-Heißabschlag-Granuliersystem einer Wasser-Feststofftrennvorrichtung aufgegeben werden,
• **daß** die getrockneten Granulate anschließend ohne die Zufuhrung externer Energie bzw. Wärme mit einer Granulattemperatur von größer als 110° C einer Bewegungseinrichtung aufgegeben werden,
• **daß** die zur Teilkristallisation führende Wärmebehandlung mittels der in den Granulaten vorhandenen Eigenwärme erfolgt.

2. Verfahren nach Anspruch 1, **dadurch gekennzeichnet, daß** die Granulate während ihrer Bewegung auf der Bewegungseinrichtung von einem Fluid umströmt werden.

3. Verfahren nach Anspruch 1, **dadurch gekennzeichnet, daß** die Granulatschicht während ihrer Bewegung auf der Bewegungseinrichtung von einem Fluid durchströmt wird.

4. Verfahren nach Anspruch 1, **dadurch gekennzeichnet, daß** die Förderung der Granulate vom Unterwassergranuliersystem zur Wasser-Feststofftrennvorrichtung mittels heißem Prozeßwasser erfolgt.

5. Verfahren nach Anspruch 4, **dadurch gekennzeichnet, daß** die Prozeßwassertemperatur bei 98° C liegt.

6. Verfahren nach Anspruch 1, **dadurch gekennzeichnet, daß** die Granulate die Bewegungseinrichtung mit einer Granulattemperatur von über 80° verlassen.

7. Vorrichtung zur Durchführung eines Verfahrens zur thermischen Behandlung von Polyesterpellets, um eine Teilkristallisation der Pellets zu erreichen mit einer Schmelzepumpe und einem Siebwechsler sowie einem Unterwassergranulator, **gekennzeichnet durch** einen Unterwasser-Heißabschlag-Granulator (2) und eine einer Wasser-Feststofftrennvorrichtung (3) nachgeschalteten, die Granulate permanent bewegenden Fördereinrichtung (4) zum Transport der Granulate, wobei die Granulate **durch** die Eigenwärme der Granulate während des Transportes kristallisieren.

8. Vorrichtung nach Anspruch 7, **dadurch gekennzeichnet, daß** die Fördereinrichtung (4) als Schwingfördereinrichtung ausgestaltet ist.

9. Vorrichtung nach Anspruch 7 oder 8, **dadurch gekennzeichnet, daß** die Fördereinrichtung (4) als Förderrinne gestaltet ist.

10. Vorrichtung nach einem oder mehreren der vorhergehenden Ansprüche, **dadurch gekennzeichnet, daß** über die Länge der Fördeninne verteilt mehrere voneinander beabstandete und jeweils einen Materialstau bewirkende Wehre (7) vorgesehen sind.

11. Vorrichtung nach einem oder mehreren der vorhergehenden Ansprüche, **dadurch gekennzeichnet, daß** die Fördereinrichtung (4) von einem Gehäuse zumindest teilweise umgeben ist

12. Vorrichtung nach Anspruch 8, **dadurch gekennzeichnet, daß** als Wasser-Feststofftrennvorrichtung (3) eine Zentrifuge vorgesehen ist

## Claims

1. Method of thermal treatment of polyester pellets in order to achieve partial crystallisation, **characterised in that**
• the polyester melt is delivered to a sub-water hot fragmentation granulating system and granulated;
• obtained granulates are delivered on a short conveying path by the sub-water hot fragmentation granulating system to a water-solid separating device;
• the dried granulates are thereafter, without delivery of external energy or heat, at a granulate temperature of above 110° delivered to movement device;
• the heat treatment which results in partial crystallisation is carried out by means of inert heat contained in the granulates.

2. Method according to Claim 1, **characterised in that** the granulates are during their movement on the movement device flowed around by a fluid.

3. Method according to Claim 1, **characterised in that** the granulate layer is during its movement on the movement device flowed around by a fluid.

4. Method according to Claim 1, **characterised in that** the granulates are moved from the sub-water granulating system to the water-solid separating device by means of hot process water.

5. Method according to Claim 4, **characterised in that** the process water temperature lies at 98°C.

6. Method according to Claim 1, **characterised in that** the granulates leave the movement device at a granulate temperature over above 80°.

7. Device for carrying out the method for thermal treatment of polyester pellets in order to achieve partial crystallization with a melt pump and a sieve exchanger as well as a sub-water granulator, **characterised by** a sub-water heat fragmentation granulator (2) and downstream of a water-solid separating device (3) a conveying device (4) which permanently moves the granulates for transport of the granulates, and the granulates crystallize by inert heat of the granulates during transportation.

8. Device according to Claim 7, **characterised in that** the conveying device (4) is designed as a swing-conveying device.

9. Device according to Claim 7 or 8, **characterised in that** the conveying device (4) is designed as a conveying gutter.

10. Device according to one or more of the above claims, **characterised in that** spaced over the length of the conveying gutter are provided spaced weirs (7) which cause respective damming of material.

11. Device according to one or more of the above claims, **characterised in that** the conveying device (4) is at least partially encased by a housing.

12. Device according to Claim 8, **characterised in that** a centrifuge is used as water-solid separating device (3).

## Revendications

1. Procédé de traitement thermique de granulés en polyester en vue d'atteindre une cristallisation partielle, **caractérisé en ce que** :
- on alimente en polyester fondu un système de granulation sous eau avec un équipement de granulation à tête, et on le granule ;
- les granulés obtenus sont chargés dans un dispositif de séparation eau/ solides par un chemin de transport court depuis le granulateur,
- les granulés séchés sont immédiatement après chargés dans un dispositif d'agitation à une température de granulés supérieure à 110°C, sans apport extérieur d'énergie ou bien de chaleur,
- le traitement thermique conduisant à la cristallisation partielle se produit au moyen de la chaleur spécifique présente dans les granulés.

2. Procédé selon la revendication 1, **caractérisé en ce qu'**un fluide s'écoule autour des granulés lors de leur agitation dans le dispositif d'agitation.

3. Procédé selon la revendication 1, **caractérisé en ce qu'**un fluide s'écoule autour de la couche de granulés lors de son agitation dans le dispositif d'agitation.

4. Procédé selon la revendication 1, **caractérisé en ce que** le chargement des granulés depuis le système de granulation sous eau vers le dispositif de séparation eau/solides est réalisé à l'aide d'eau à usage industriel chaude.

5. Procédé selon la revendication 4, **caractérisé en ce que** l'eau à usage industriel est à une température de 98°C.

6. Procédé selon la revendication 1, **caractérisé en ce que** les granulés quittent le dispositif d'agitation avec une température de granulés supérieure à 80°C.

7. Dispositif pour conduire un procédé de traitement thermique des granulés de polyester en vue d'atteindre une cristallisation partielle des granulés comprenant :
- une pompe d'amenée des matières premières, et
- un changeur de filtre,
- ainsi qu'un granulateur sous eau
**caractérisé par** un granulateur sous eau (2) avec un équipement de granulation à tête, et un dispositif de transport (4) destiné au transport des granulés, qui est disposé en aval d'un dispositif de séparation eau/solides (3), et dans lequel les granulés sont agités en permanence et cristallisent lors du transport au moyen de la chaleur spécifique des granulés.

8. Dispositif selon la revendication 7, **caractérisé en ce que** le dispositif de transport (4) est configuré comme un dispositif de transport vibrant.

9. Dispositif selon la revendication 7 ou 8, **caractérisé en ce que** le dispositif de transport (4) est configuré sous forme de goulotte de transport.

10. Dispositif selon l'une ou plusieurs des revendications précédentes, **caractérisé en ce que** le long de la conduite de transport, est distribuée une pluralité de barrages espacés les uns des autres, causant une accumulation de matière.

11. Dispositif selon l'une ou plusieurs des revendications précédentes, **caractérisé en ce que** le dispositif de transport (4) est entouré au moins en partie par un boîtier.

12. Dispositif selon la revendication 8, **caractérisé en ce qu'**une centrifugeuse est prévue comme dispositif de séparation eau/solides (3).
